# EUROPEAN PATENT APPLICATION

(11) **EP 4 523 816 A1**
(43) Date of publication of application: **19.03.2025**
(21) Application number: 23020426.5
(22) Date of filing: 12.09.2023
(51) Int. Cl.: B22F 3/10, B22F 10/14, B33Y 10/00, B22F 3/00

(54) **METHOD FOR DEBINDING IN BINDER JETTING ADDITIVE MANUFACTURING**

(71) Applicant: Linde GmbH, 82049 Pullach (DE)
(72) Inventor: Foret, Pierre, 82049 Pullach (DE); Bernardo Quejido, Elena, 82049 Pullach (DE); Zissel, Kai, 82049 Pullach (DE)
(74) Representative: Gellner, Bernd

(57) **Abstract**

The invention relates to a method for additive manufacturing of a metal workpiece comprising the steps of providing a feedstock of metal material, forming a layer of the metal material, providing a liquid binder on at least part of the layer of metal material, repeating the steps of providing the metal material and providing the binder to form the workpiece in green state, and thermally treating the workpiece in green state in a debinding atmosphere to remove the binder from the workpiece in green state. The debinding atmosphere is a mixture of argon and / or nitrogen with oxygen and that the oxygen content in the debinding atmosphere is between 0,1 % by volume and 10 % by volume.

## Description

The invention relates to a method for additive manufacturing of a metal workpiece comprising the steps of providing a feedstock of metal material, forming a layer of the metal material, providing a liquid binder on at least part of the layer of metal material, repeating the steps of providing the metal material and providing the binder to form the workpiece in green state, and thermally treating the workpiece in green state in a debinding atmosphere to remove the binder from the workpiece in green state.

### TECHNICAL FIELD

The invention applies to the manufacturing process of metal parts through a sinter-based additive manufacturing technology. The term "sinter-based additive manufacturing technology" shall mean an additive manufacturing technology which includes a process step of densifying the workpiece by a thermal treatment. Sinter-based additive manufacturing technology is a technology for mass production of parts or workpieces. One example of this sinter -based additive manufacturing technology is binder jetting additive manufacturing.

In binder jetting additive manufacturing, the workpieces are built up layer by layer. A layer of powder is deposited on a plate and an inkjet printer is used to selectively inject a liquid binder to specific points and sections which shall be part of the final workpiece. The powder particles of the powder bed are joined by the binder. Uncoated powder remains loose in the layer. Subsequently another layer of powder is deposited and the binder injection step is repeated. At the positions where binder is applied each successive layer bonds to the preceding layer. These steps are repeated until the workpiece is completely formed. At this stage the workpiece is also called green part or a workpiece in green state.

Unbound powder is removed from the workpiece. Thereafter, the workpiece is exposed to a thermal treatment or heat treatment to remove the binder from the workpiece. This binder removal step is also called "debinding". The workpiece in green state is transferred to the so-called brown state. During debinding, most of the binder is decomposed and eliminated leaving just trace amounts in the brown part. Finally, another heat treatment step is subsequently applied to sinter and consolidate the brown part.

It is known to perform the debinding step in an air atmosphere. During debinding the binder shall be decomposed and expelled from the workpiece. Thus, the presence of an oxidative molecule like oxygen is key to promote binder decomposition. Oxygen may break down the hydrocarbon chains of the binder into volatile by-products, mainly to carbon dioxide (CO2) and water (H2O).

However, in binder jetting additive manufacturing of metallic feed material the use of high contents of oxygen is detrimental for the metallic material since oxidation may occur. Surface oxides are formed on the metal material as well as oxygen can selectively combine with elements present in the composition to form stable oxide inclusions that remain in the consolidated workpiece.

Although oxidation can be partially overcome during the subsequent sintering step if highly reductive atmosphere is applied, the final microstructure and mechanical properties of the workpiece may be affected, resulting in deteriorated fracture or corrosion behaviour in the final workpiece.

On the other hand, the use of inert atmospheres during debinding may lead to inefficient binder decomposition and insufficient binder removal leading to char residue and unstable part chemistry. This contamination inhibits proper sintering of the metal material and, even for some materials, it may also result in carbide formation after sintering. Carbon residuals can also negatively impact material properties such as electrical conductivity.

It is further known to carry out the debinding step in vacuum or in a hydrogen atmosphere. While vacuum or hydrogen atmosphere avoid oxidation problems, other issues arise. In vacuum any binder removed from the workpiece could damage the vacuum pump. Binder removal in a hydrogen atmosphere includes an explosivity risk.

Thus, it is an object of the invention to overcome one or more of the above mentioned problems and in particular to improve the debinding step in binder jetting additive manufacturing.

### SUMMARY OF THE INVENTION

According to the invention this object is achieved by a method for additive manufacturing of a metal workpiece comprising the steps of:
- Providing a feedstock of metal material,
- Forming a layer of the metal material,
- Providing a liquid binder on at least part of the layer of metal material,
- repeating the steps of providing the metal material and providing the binder to form the workpiece in green state,
- and thermally treating the workpiece in green state in a debinding atmosphere to remove the binder from the workpiece in green state.

The debinding atmosphere is a mixture of argon and / or nitrogen with oxygen and the oxygen content in the debinding atmosphere is between 0,1 % by volume (0,1 vol-%) and 10 % by volume (10 vol-%).

The invention is based on argon - oxygen, nitrogen - oxygen and argon-nitrogen-oxygen mixtures with low contents of oxygen to be used as a process gas for debinding. The oxygen concentration in the debinding atmosphere is between 0,1 vol- % and 10 vol-%. The invention is not limited to a specific metal material nor to a specific binder.

The invention provides a gas mixture that enhances clean binder decomposition with minimized decomposition products being left in the workpiece after sintering, like char residues or metal oxides. As a result, the chemical composition of the workpiece is stable after subsequent sintering and carbon / oxygen levels are well controlled in the final workpiece. The use of the inventive debinding atmosphere with tailored oxygen content allows to attain a controlled and stable chemical composition of the final part, with mitigated carbon residues and oxygen pick-up. Further, the debinding can be done in a user-friendly environment since no huge amount of hydrogen is involved in debinding.

It has been found that suitable gas mixtures used as debinding atmosphere should contain between 0,1 vol.% oxygen and 10 vol.% oxygen. The presence of 0,1 vol-% 02 in the process gas is beneficial to attain low carbon and low oxygen contents in the final sintered part, even when no reducing agent is present during a subsequent sintering step.

For proper debinding it is necessary to have a certain amount of oxygen in the debinding atmosphere. The binder is typically a long-chain hydrocarbon which has to be decomposed into small molecules and preferably into volatile products. The volatile products which are mainly carbon dioxide and water can then be easily removed from the workpiece. Without any oxygen in the debinding atmosphere it is hard or even not possible to break down the binder into smaller molecules which could be removed. It has been found that the oxygen concentration in the debinding atmosphere should be at least 0,1 % by volume, preferably at least 0,5 vol-% or at least 1 vol-%.

On the other hand, a high oxygen concentration might cause surface oxidation of the metal material, especially when it is in form of powder with its large surface. Metal oxides resulting from such oxidation process can negatively affect the properties of the final workpiece. It has been found that the upper limit for the oxygen concentration in the debinding atmosphere is 10 % by volume or preferably 8 % by volume.

It has further been found that the upper limit of the oxygen content in the debinding atmosphere is critical for oxidation. Therefore, in preferred embodiments the oxygen content in the debinding atmosphere is less than 8 % by volume, less than 5 % by volume, less than 3 % by volume or less than 2 % by volume.

In a preferred embodiment of the invention a flow of the debinding atmosphere is provided along or across the workpiece. Such a gas flow is beneficial to remove the volatile products of the decomposed binder away from the workpiece. If the debinding atmosphere is provided in a furnace or in another closed space, it is preferable to continuously withdraw part of the atmosphere and at the same time introduce new gas into the closed space or furnace so that a gas flow in the debinding atmosphere is achieved.

The main components of the debinding atmosphere are argon and / or nitrogen. The total amount of argon and nitrogen in the debinding atmosphere is preferably at least 90% by volume. Preferably the total amount of argon, nitrogen and oxygen is at least 95% by volume, at least 98 % by volume or at least 99 % by volume. In other words, the concentration of any other gases besides argon, nitrogen and oxygen is low, preferably less than 5 %, less than 3 % or less than 1 % by volume.

Examples for a debinding atmosphere according to the invention are:
- argon and 0,1 to 10 % by volume oxygen
   wherein argon + oxygen > 99 vol-%
- nitrogen and 0,1 to 10 % by volume oxygen
   wherein nitrogen + oxygen > 99 vol-%
- a mixture of argon and nitrogen plus 0,1 to 10 vol-% oxygen
   wherein argon + nitrogen + oxygen > 99 vol-%

Tests have shown that argon and nitrogen mixed with the inventive low amount of oxygen can be used for any metallic material i.e. reactive alloys or alloys containing reactive elements in the composition. The inventive method is in particular beneficial for steel containing Cr, Mn, Si and / or Cu in composition and for Ti or Al based alloys. The invention also works well for Ni and Co based alloys.

After sintering the final workpiece manufactured according to the present invention shows low char residues and reduced oxidation compared to workpieces manufactured according to the prior art. Desired chemical composition and microstructure of the final workpieces is retained. The workpiece shows improved chemical composition by low C and O content compared to the prior art.

By using the inventive method the debinding step can be carried out at higher temperatures and the required time for debinding is reduced. The thermal cycle during debinding can be optimized.

The invention is especially advantageous when metal powder is used as feedstock. Metal powder or pulverized metal material has a large surface and is therefore highly sensitive for oxidation. Limiting the maximum oxygen content to 10 vol-% or preferably to 8 vol-% has proven to considerably reduce or even prevent oxidation.

The invention can be used for any sinter-based additive manufacturing technology or metal injection molding. Examples where the invention provides advantages are binder jetting additive manufacturing, metal extrusion, pellet material extrusion, metal lithography, and mold slurry deposition.

In a preferred embodiment, the debinding step is carried out at a temperature below 600 °C or preferably below 450 °C. Thermal treatment of the workpiece in green state in this temperature range allows a sufficient decomposition and removal of the binder.

After debinding the workpiece is in the so-called brown state. The workpiece in brown state is preferably be sintered at a temperature above 600 °C. The sintering is carried out in a sintering atmosphere which is different from the debinding atmosphere, normally inert, reducing or vacuum atmosphere. Preferably, the sintering atmosphere has an initial oxygen concentration of less than 10 ppm.

In one embodiment the metal material used as feedstock for the additive manufacturing process is copper, titanium, aluminium or a metallic alloy comprising one of these metals. Reactive based material as the ones mentioned above may benefit from the controlled debinding atmosphere according to the invention. The inventive debinding atmosphere ensures proper elimination of the chemical binder and at the same time protects the metal material from oxidation. The positive effects of the present invention can also be seen when metallic alloys containing oxygen sensitive elements, for example chromium or silicon, are used as feedstock.

In another embodiment the inventive method is used for additive manufacturing of stainless steel material, especially of stainless steel powder or pulverized stainless steel material.

Binder jetting additive manufacturing tests with stainless steel material with additions of copper, niobium and tantalum or with 17-4 PH stainless steel have shown that the oxygen concentration in the debinding atmosphere should preferably be between 1 vol- % and 3 vol-%.

In another embodiment the oxygen content of the debinding atmosphere is controlled depending on the metal material and / or on the binder. Though the inventive range of 0,1 vol-% to 10 vol-% oxygen content in the debinding atmosphere shows good results, it could be advantageous to fine-tune the oxygen concentration for specific metal materials and / or for specific binders and/or for specific workpiece sizes.

By controlling the supply of argon, nitrogen and / or oxygen to the furnace the oxygen content of the debinding atmosphere can be controlled. Argon, nitrogen and oxygen can be supplied as separate individual gases or as premixtures of two or three of these gases. Oxygen might be supplied as pure oxygen or as an oxygen-containing gas, such as air. However, it should be ensured that the concentration of gases other than argon, nitrogen and oxygen in the debinding atmosphere is kept low, especially below 5 vol-%, below 3 vol-% or below 1 vol-%.

In one embodiment the debinding atmosphere is provided in a furnace and the oxygen content of the debinding atmosphere is determined inside the furnace. According to another embodiment the debinding atmosphere is provided in a furnace, a part of the debinding atmosphere is extracted from the furnace and the oxygen content of the extracted part is determined outside the furnace. In both cases - oxygen determination inside or outside the furnace - a control loop between the determined oxygen content and the supply of gases to the furnace can be implemented to ensure that the desired oxygen concentration is achieved.

During the debinding process the binder is decomposed and decomposition products, such as water and carbon dioxide, are created. These decomposition products could either block gas sensors, in particular oxygen sensors, inside the furnace or falsify the measurements of such sensors. Therefore, in one embodiment the gas flow of argon and / or nitrogen and / or oxygen supplied to the debinding atmosphere is monitored and / or controlled. In addition it is possible to determine the oxygen content inside the furnace or to determine the composition of the gases leaving the furnace.

In an embodiment the invention includes an atmosphere control system to measure and control the oxygen content present in the furnace during debinding. The oxygen content can be set to the right level depending on the metal material and / or the type of binder. The desired gas mixture used as debinding atmosphere is mixed on site. A control loop between the oxygen measurement of the debinding atmosphere and the supply of the gas mixture or the supply of the components to the gas mixture ensures the desired oxygen content. The oxygen measurement can be done in-situ or outside of the furnace via gas extraction.

The invention provides an optimized debinding atmosphere which enables binder removal at slightly higher temperatures, using shorter times and resulting in low carbon and oxygen residues. Thereby, the carbon residuals and the chemical stability of the workpiece in brown state can be controlled and it shows improved sinterability.

Moreover, the use of tailored oxygen contents in the working gas may also result in improved and faster thermal cycles for debinding. Higher temperatures are enabled to improve binder removal with less oxygen pick-up risk in the metal.

The above and other aspects, features, and advantages of certain embodiments of the invention will be more apparent from the following examples, when taken in conjunction with the accompanying drawing, in which:

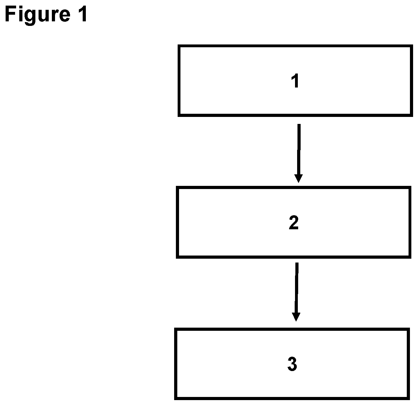

- Figure 1: schematically shows the process steps for manufacturing a 3-dimensional workpiece.

Experiments have been made to investigate the effect of the inventive method on the oxygen and carbon content of the final workpiece. The tests have been carried out with stainless steel powder 17-4 PH. 17-4 PH stainless steel powder is a well-known and widely used material for additive manufacturing. It is a steel powder with additions of about 17% Cr and about 4% Ni. Further, it contains 3 - 5 % Cu and 0.7 % Nb and low concentrations of Si, Mn and C. It is also known as stainless steel grade 630.

The stainless steel powder 17-4 PH has been used as a feedstock for binder jetting additive manufacturing of a 3-dimensional workpiece. A layer of the stainless steel powder is deposited on a plate and an inkjet printer is used to selectively inject a liquid binder to specific points and sections which shall be part of the final workpiece. The powder particles of the powder bed are joined by the binder. Uncoated powder remains loose in the layer.

Subsequently another layer of powder is deposited and the binder injection step is repeated. At the positions where binder is applied each successive layer bonds to the preceding layer. These steps are repeated until a so-called green workpiece is completely formed. Unbound powder is removed from the workpiece. This additive manufacturing process is shown as step 1 in figure 1.

A number of identical green workpieces have been manufactured using the above described binder jetting additive manufacturing process.

The green workpieces have then been exposed to a heat treatment for debinding, that is to remove the binder from the workpiece. This debinding step 2 has been carried out in different debinding atmospheres as will be explained in more detail below.

Subsequently the workpieces have been sintered for 2 hours in an argon atmosphere at 1300 °C and with a gas flow through the furnace of 4 l/h (step 3).

The initial oxygen and carbon contents of the virgin powder were:
- 1163 ± 8 ppm of oxygen and
- 244 ± 12 ppm of carbon

In all tests the binder jetting additive manufacturing process 1 and the final sintering 3 have been carried out under the same conditions. However, the composition of the debinding atmosphere 2 differed for examples 1, 2 and 3.

### Example 1:

Pure argon has been used as debinding atmosphere. A flow of 4 l/h argon is passed through the furnace.

### Example 2:

A gas mixture of 99 vol-% argon and 1 vol-% 02 has been used as debinding atmosphere. A flow of 4 l/h of this gas mixture is passed through the furnace.

### Example 3:

Air has been used as debinding atmosphere. A flow of 4 l/h air is passed through the furnace.

The following table shows the results of the experiments. The oxygen content and the carbon content of the final workpiece have been determined after the debinding and sintering steps. The relative changes in % are in comparison to the original powder.

| | **Debinding atm Gas flow: 4 l/h** | **Oxygen content (ppm)** | **Carbon content (ppm)** | **Relative oxygen decrease/increase in %** | **Relative carbon decrease/increase in %** |
|---|---|---|---|---|---|
| Example 1 | Argon | 19 ± 5 | 2244 ± 69 | -98,4% | +800% |
| Example 2 | Ar+1%O₂ (vol.%) | 627 ± 220 | 221 ± 15 | -46,1% | -9,5% |
| Example 3 | Air | 2021 ± 393 | 99 ± 10 | +73,8% | -59,4% |

Example 1 shows that debinding in pure argon, i.e. in inert gas, reduces the oxygen content of the final workpiece to a minimum. However, the carbon content considerably increases by 800%.

On the other hand, debinding in air, i.e. in an atmosphere with an oxygen concentration of about 21 vol-%, results in an increase of the oxygen content of the workpiece by more than 70% (example 3).

Both, a high oxygen content and a high carbon content, can negatively affect the material properties of the workpiece.

Example 2 represents the inventive method wherein the debinding atmosphere is a mixture of argon and oxygen. In this particular case the debinding atmosphere consisted of 99 vol-% argon and 1 vol-% oxygen. Debinding in such an atmosphere provides workpieces which show a reduced oxygen content and a reduced carbon content compared to the original virgin powder. The oxygen content is reduced by more than 46% and the carbon content is reduced by more than 9% compared to the virgin metal powder. Therefore, by using the inventive method workpieces with low oxygen and carbon residues and with improved material properties can be manufactured.

## Claims

1. Method for additive manufacturing of a metal workpiece comprising the steps of:
- Providing a feedstock of metal material,
- Forming a layer of the metal material,
- Providing a liquid binder on at least part of the layer of metal material,
- repeating the steps of providing the metal material and providing the binder to form the workpiece in green state,
- and thermally treating the workpiece in green state in a debinding atmosphere to remove the binder from the workpiece in green state,
**characterized in that**
the debinding atmosphere is a mixture of argon and / or nitrogen with oxygen and that the oxygen content in the debinding atmosphere is between 0,1 % by volume and 10 % by volume.

2. Method according to claim 1, **characterized in that** the oxygen content in the debinding atmosphere is less than 8 % by volume, less than 5 % by volume, less than 3 % by volume or less than 2 % by volume.

3. Method according to claim 1 or 2, **characterized in that** the oxygen content in the debinding atmosphere is at least 0,5 vol-% or at least 1 vol-%.

4. Method according to any of the preceding claims, **characterized in that** the metal material is a metal powder.

5. Method according to any of the preceding claims, **characterized in that** the workpiece is manufactured by binder jetting additive manufacturing, metal extrusion, metal injection molding, pellet material extrusion, metal lithography, or mold slurry deposition.

6. Method according to any of the preceding claims, **characterized in that** the workpiece in green state is thermally treated at a temperature below 600 °C, preferably below 450 °C.

7. Method according to any of the preceding claims, **characterized in that** after the binder has been removed from the workpiece, the workpiece is sintered at a temperature of more than 600 °C.

8. Method according to any of the preceding claims, **characterized in that** the metal material is stainless steel, copper, titanium, aluminium or an alloy comprising one of these metals.

9. Method according to any of the preceding claims, **characterized in that** the metal material is a metallic alloy containing chromium or silicon.

10. Method according to claim 8, **characterized in that** the metal material is stainless steel and that the debinding atmosphere consists of argon and oxygen wherein the oxygen content is between 1 % by volume and 3 % by volume.

11. Method according to any of the preceding claims, **characterized in that** the oxygen content of the debinding atmosphere is controlled depending on the metal material and / or on the binder and/or on the size or complexity of the workpiece.

12. Method according to any of the preceding claims, **characterized in that** the debinding atmosphere is provided in a furnace and that the oxygen content is determined inside the furnace.

13. Method according to any of the preceding claims, **characterized in that** the debinding atmosphere is provided in a furnace, that a part of the debinding atmosphere is extracted from the furnace and that the oxygen content of the extracted part is determined outside the furnace.

14. Method according to any of the preceding claims, **characterized in that** argon and / or nitrogen and oxygen are supplied to the debinding atmosphere and that the gas flow of argon and / or nitrogen and / or oxygen are controlled.

15. Method according to any of the preceding claims, **characterized in that** a flow of the debinding atmosphere is provided along or across the workpiece.
